# EUROPÄISCHE PATENTANMELDUNG

(11) **EP 2 701 115 A1**
(43) Veröffentlichungstag der Anmeldung: **26.02.2014**
(21) Anmeldenummer: 13181080.6
(22) Anmeldetag: 20.08.2013
(51) Int. Cl.: G06Q 30/06

(54) **Verfahren und System zur Live-Video-Beratung**

(30) Priorität: 22.08.2012 DE 102012214902
(71) Anmelder: LivePoint GmbH, 82319 Starnberg (DE)
(72) Erfinder: Hohenacker, Thomas, 82319 Starnberg (DE)
(74) Vertreter: Manitz, Finsterwald & Partner GbR

(57) **Zusammenfassung**

Die Erfindung betrifft ein Verfahren zur Live-Video-Beratung wenigstens eines Kunden unter Verwendung eines Beratungssystems, welches wenigstens ein Kundensystem mit einem Kundencomputer, ein Netzwerk sowie ein über das Netzwerk mit dem Kundensystem verbundenes Anbietersystem umfasst, wobei das Anbietersystem ein Serversystem und mehrere mit dem Serversystem verbundene Beratersysteme mit jeweils einem Beratercomputer und jeweils einer Kamera umfasst, wobei das Verfahren die Schritte umfasst:
- Empfangen einer von dem Kundensystem über das Netzwerk gesendeten Beratungsanfrage durch das Serversystem,
- Auswählen eines von mehreren Ersatzhintergründen, die in dem Anbietersystem verfügbar sind, durch das Anbietersystem, insbesondere in Ansprechen auf die Beratungsanfrage,
- Auswählen eines Beratungssystems für die Live-Beratung,
- Aufnehmen von Live-Video-Informationen mit der Kamera des ausgewählten Beratersystems und Ersetzen des in den aufgenommenen Live-Video-Informationen enthaltenen Hintergrunds durch den ausgewählten Ersatzhintergrund zur Bildung eines Live-Beratervideos, und
- Übertragen des Live-Beratervideos als Teil eines Live-Video-Streams an das Kundensystem über das Netzwerk.

## Beschreibung

Die vorliegende Erfindung betrifft ein Verfahren und ein System zur persönlichen Beratung wenigstens eines Kunden, insbesondere zur Kaufberatung in Bezug auf Reisen oder Waren wie Kraftfahrzeuge, Wein, Medikamente, Sport- oder Modebekleidung und Ähnliches.

Eine solche persönliche Kaufberatung findet derzeit üblicherweise in einem Geschäftslokal eines Anbieters bzw. Unternehmers, wie z.B. in einem Reisebüro, in persönlicher Gegenwart des Beraters und des Kunden statt. Das Erfordernis der gleichzeitigen Anwesenheit bei dieser stationären Art der Beratung ist mit dem Nachteil verbunden, dass ein Berater untätig ist, wenn sich kein Kunde in dem Geschäftslokal befindet und dass einem Kunden keine Beratung angeboten werden kann, wenn in dem jeweiligen Geschäftslokal kein Berater verfügbar ist. Durch die unweigerlich auftretende Diskrepanz zwischen der Anwesenheit der Kunden und der Verfügbarkeit der Berater in einem Geschäftslokal wird die Effizienz dieser Art der stationären Beratung erheblich reduziert.

Die vorliegende Erfindung befasst sich demgegenüber mit einem Verfahren und System zur Live-Video-Beratung. Diese hat den Vorteil, dass die gleichzeitige Anwesenheit von Berater und Kunde an demselben Ort nicht erforderlich ist, sondern stattdessen ein Video des Beraters aufgenommen und live an den Kunden übertragen wird, so dass sich Kunde und Berater jeweils prinzipiell an einem beliebigen Ort befinden können. Bei einer solchen Live-Video-Beratung kommt es entscheidend darauf an, dem Kunden das Gefühl einer persönlichen und individuellen Beratung in einem ansprechenden und dem Anliegen des Kunden thematisch entsprechenden Ambiente zu vermitteln.

Prinzipiell sind Verfahren und Systeme bekannt, mit denen sich ein Video, das von einer an einem Computer angeschlossenen Kamera aufgenommen wird, über ein Netzwerk wie z.B. das Internet live an einen weiteren Computer übertragen lässt. Die bekannten Verfahren und Systeme eignen sich aber nicht unmittelbar für eine Verwendung zu einer Live-Video-Beratung, da die vorstehend genannten Anforderungen nicht erfüllt werden können. So vermittelt ein an einem gewöhnlichen Computerarbeitsplatz eines Beraters aufgenommenes Video typischerweise nicht den für eine Videoübertragung gewünschten attraktiven Eindruck und stellt insbesondere kein für ein Beratungsvideo günstiges Ambiente bereit. Die Anpassung des Computerarbeitsplatzes eines Beraters an die Erfordernisse einer ansprechenden Videoübertragung, beispielsweise durch eine entsprechende Ausstattung bzw. Dekoration und/oder Beleuchtung, ist allerdings mit einem erheblichen Aufwand verbunden.

Selbst wenn der Computerarbeitsplatz eines Beraters mit entsprechenden Kulissen, einer Beleuchtung und ähnlichen Einrichtungsgegenständen in einer Weise gestaltet wird, die prinzipiell einen ansprechenden und für eine Videoübertragung geeigneten Hintergrund bereitstellt, besteht das Problem, dass der Hintergrund in thematischer Hinsicht nicht flexibel an eine vorliegende Beratungsanfrage eines Kunden anpassbar ist. Um dem Kunden unabhängig von seiner konkreten Anfrage das Gefühl einer persönlichen Beratung in einem seiner Anfrage entsprechenden Ambiente zu geben, wäre somit eine der Themenvielfalt der erwarteten Beratungsanfragen entsprechende Vielzahl von unterschiedlich eingerichteten und dekorierten Beraterarbeitsplätzen notwendig, die mit Beratern besetzt werden müssten, so dass die Implementierung eines den Anforderungen entsprechenden und für die Bedienung einer Vielzahl von Beratungsthemen geeigneten Beratungssystems mit hohen Kosten verbunden oder letztlich sogar praktisch unmöglich ist.

Aufgabe der Erfindung ist es, ein Verfahren und System zur Live-Video-Beratung zu schaffen, das einem Kunden den Zugang zu einer Vielzahl von Beratern gewährleistet und das dem Kunden zur Beratung einen Live-Video-Stream zur Verfügung stellt, in dem ein von dem Kunden ausgewählter Berater unabhängig von dessen Aufenthaltsort in einem der Anfrage des Kunden entsprechenden Ambiente präsentiert wird, wobei das Verfahren und das System mit geringem Material-, Kosten- und Personalaufwand realisiert werden können.

Diese Aufgabe wird durch ein Verfahren mit den Merkmalen des Anspruchs 1 und durch ein System mit den Merkmalen des Anspruchs 15 gelöst.

Im Rahmen des erfindungsgemäßen Verfahrens wird ein Beratungssystem verwendet, welches wenigstens ein Kundensystem mit einem Kundencomputer, ein Netzwerk sowie ein über das Netzwerk mit dem Kundensystem verbundenes Anbietersystem umfasst. Das Anbietersystem weist ein Serversystem und mehrere mit dem Serversystem verbundene Beratersysteme auf, wobei die Beratersysteme jeweils einen Beratercomputer und eine Kamera umfassen. Bestandteil des Verfahrens ist das Empfangen einer von dem Kundensystem über das Netzwerk gesendeten Beratungsanfrage durch das Serversystem. Vorzugsweise in Ansprechen auf die Beratungsanfrage wird durch das Anbietersystem einer von mehreren Ersatzhintergründen ausgewählt, die in bzw. an dem Anbietersystem verfügbar sind. Es werden ferner ein Beratersystem für die Live-Beratung ausgewählt und Live-Video-Informationen mit der Kamera des identifizierten Beratersystems aufgenommen. Der in den aufgenommenen Live-Video-Informationen enthaltene Hintergrund wird durch den ausgewählten Ersatzhintergrund ersetzt, um ein Live-Beratervideo zu erzeugen. Das Live-Beratervideo wird als Teil eines Live-Video-Streams über das Netzwerk an das Kundensystem übertragen.

Erfindungsgemäß wird zur Erzeugung des Beratervideos, das dem Kundensystem von dem Anbietersystem in dem Live-Video-Stream übermittelt wird, der in den von dem Beratersystem aufgenommenen ursprünglichen Video-Daten enthaltene Hintergrund unter Verwendung einer entsprechenden, z.B. softwaretechnischen digitalen, Videobearbeitung durch einen Ersatzhintergrund ersetzt, der durch das Anbietersystem, insbesondere in Ansprechen auf die Beratungsanfrage, ausgewählt wird. Das übertragene Beratervideo zeigt den Berater folglich vor einem Hintergrund, der anfragenspezifisch passend gewählt ist, so dass eine attraktive Präsentation des Beraters vor einem der Kundenerwartung entsprechenden Hintergrund erreicht wird, und zwar unabhängig davon, welchen Berater bzw. welches Beratersystem aus der verfügbaren Vielzahl von Beratersystemen von dem Kunden ausgewählt wurde.

Diese attraktive Präsentation wird unabhängig von dem Aufenthaltsort des ausgewählten Beraters und Beratersystems bzw. dem an dem Aufenthaltsort vorhandenen und in den ursprünglichen von dem Beratersystem aufgenommenen Video-Informationen enthaltenen tatsächlichen Hintergrund erreicht, so dass keine spezielle dekorative Einrichtung des den Beratercomputer umfassenden Computerarbeitsplatzes nötig ist. Der Berater ist in der Lage, die Beratungsdienstleistung praktisch von einem beliebigen Ort bzw. Computerarbeitsplatz aus zu erbringen, z.B. von einem Geschäftslokal aus, ebenso wie von zu Hause aus. Da das Live-Beratervideo den Berater von Beginn an vor dem anfragenspezifisch ausgewählten Ersatzhintergrund zeigt, besteht dabei nicht die Gefahr, dass für den Kunden der Eindruck einer unpassenden oder gar unseriösen Beratungssituation aufgrund eines für den Kunden unerwarteten Hintergrunds entsteht.

Vorteilhafte Ausführungsformen der Erfindung sind in den Unteransprüchen, der Beschreibung und den Figuren beschrieben.

An dem erfindungsgemäßen Verfahren können eine beliebige Anzahl von Beratern bzw. Beratersystemen und/oder Kunden bzw. Kundensystemen teilnehmen. Die Kundensysteme können dabei örtlich beliebig verteilt angeordnet sein, insbesondere wenn die Kundensysteme über das Internet oder "World Wide Web" mit dem Anbietersystem verbunden sind. Die Beratersysteme sind vorzugsweise ebenfalls über das Internet mit dem Serversystem und ggf. mit den Kundensystemen verbunden, so dass auch die Beratersysteme örtlich beliebig verteilt sein können.

Gemäß einer vorteilhaften Ausführungsform wird ein Beratungssystem verwendet, das mehrere Kundensysteme mit jeweils einem Kundencomputer umfasst, die mit dem Anbietersystem über das Netzwerk verbunden sind, wobei von dem Anbietersystem gleichzeitig mehrere verschiedene Live-Video-Streams an verschiedene Kundensysteme übertragen werden. Die unterschiedlichen Live-Video-Streams enthalten dabei von unterschiedlichen Beratersystemen aufgenommene Live-Video-Informationen und verschiedene Ersatzhintergründe, durch welche jeweils der ursprüngliche Hintergrund der von dem jeweiligen Beratersystem aufgenommenen Live-Video-Informationen ersetzt worden ist. Verschiedene Kunden werden im Rahmen des Verfahrens somit gleichzeitig von verschiedenen Beratern persönlich beraten, wobei sich jeder Berater unabhängig von den anderen Beratersystemen und Kundenanfragen vor einem der jeweiligen Anfrage entsprechenden Hintergrund präsentiert, der sich ggf. von dem Hintergrund, der von einem anderen Berater bzw. Beratersystem verwendet wird, unterscheiden kann.

Die Beratungsanfrage kann eine oder mehrere Teilanfragen umfassen, beispielsweise eine allgemeine Beratungsanfrage, die eine Angabe des Themas der gewünschten Beratung enthält, und/oder eine Berateranfrage, anhand der ein von dem Kundensystem ausgewähltes Beratersystem identifizierbar ist. Ein Verfahrensschritt, der in Ansprechen auf die Beratungsanfrage durchgeführt wird, z.B. die Auswahl des Ersatzhintergrunds, kann, wenn die Beratungsanfrage mehrere Teilanfragen umfasst, in Ansprechen auf eine der Teilanfragen getroffen werden. Die Beratungsanfrage bzw. eine Teilanfrage der Beratungsanfrage kann z.B. einen http-Aufruf bzw. http-Request umfassen, der z.B. an eine Webadresse des Serversystems gerichtet ist, oder einen anderen webbasierten Aufruf. Zumindest zwei und vorzugsweise alle Teilanfragen der Beratungsanfrage können Teil derselben Sitzung, insbesondere einer Client-Server-Sitzung zwischen dem Kundensystem und dem Serversystem wie z.B. einer http-Sitzung, TCP-Sitzung oder ähnlichen webbasierten Sitzung sein, so dass die verschiedenen Teilanfragen über die gemeinsame Sitzung miteinander in Beziehung gebracht und der gemeinsamen Beratungsanfrage zugeordnet werden können.

Bevorzugt wird das Beratersystem für die Live-Beratung durch das Kundensystem ausgewählt. Die Auswahl des Beratersystems kann dabei durch eine an dem Kundensystem von dem Kunden vorgenommene Benutzereingabe getroffen werden. Das Kundensystem sendet vorzugsweise eine entsprechende Berateranfrage an das Anbietersystem, anhand der das ausgewählte Beratersystem identifizierbar ist.

Die Berateranfrage kann beispielsweise einen http-Aufruf umfassen und kann prinzipiell die einzige Teilanfrage der Beratungsanfrage bilden, d.h. mit der Beratungsanfrage identisch sein. Vorzugsweise bildet die Berateranfrage jedoch eine von mehreren während derselben Websitzung gestellten Teilanfragen der Beratungsanfrage.

Vorzugsweise überwacht das Serversystem kontinuierlich, welche Beratersysteme zu dem jeweils aktuellen Zeitpunkt für eine Live-Beratung verfügbar sind. Vorzugsweise werden die Berater oder Beratersysteme, die prinzipiell an dem Verfahren teilnehmen, an dem Serversystem zentral registriert. Jedem Berater oder Beratersystem wird bei der Registrierung vorzugsweise einer von mehreren von dem Serversystem verwalteten Accounts zugeordnet, mit dem der jeweilige Berater sich bzw. das von ihm verwendete Beratersystem für die Live-Beratung anmelden bzw. einloggen kann. Ebenso ist vorzugsweise ein Abmeldeverfahren vorgesehen, mit dem sich die an dem Serversystem angemeldeten Beratersysteme wieder abmelden können. Das Serversystem kann somit kontinuierlich überwachen, welche Beratersysteme aktuell angemeldet sind und somit zu jedem gegebenen Zeitpunkt für eine Live-Beratung zur Verfügung stehen.

Die Beratungsanfrage kann beispielsweise eine allgemeine Beratungsanfrage umfassen, die von dem Kundensystem zeitlich vor einer wie vorstehend beschriebenen Berateranfrage an das Serversystem gesendet und von diesem empfangen werden kann. Diese allgemeine Beratungsanfrage kann beispielsweise durch den Kunden unter Verwendung eines auf dem Kundencomputer laufenden Webbrowsers gesendet werden und z.B. in dem Aufruf einer von dem Serversystem über das Internet bereitgestellten Live-Beratungs-Webseite durch das Kundensystem bestehen.

Die Live-Beratungs-Webseite kann beispielsweise derart in den Web-Auftritt bzw. des Website des Anbieters der Live-Beratung eingebunden sein, dass die Live-Beratungs-Webseite über einen auf einer allgemeinen Webseite des Anbieters enthaltenen Link wie einen Hyperlink oder eine entsprechende webbasierte Verknüpfung erreichbar ist.

Vorzugsweise sendet das Serversystem auf eine wie vorstehend beschriebene allgemeine Beratungsanfrage eines Kundensystems eine Verfügbarkeitsinformation oder Verfügbarkeitsnachricht an das Kundensystem, die eine Angabe der zur Verfügung stehenden Beratersysteme enthält. Die darin angegebenen verfügbaren Beratersysteme werden von dem Serversystem vorzugsweise abhängig von vorgegebenen Kriterien aus der Gesamtmenge aller an dem System angemeldeten und somit generell verfügbaren Beratersysteme ausgewählt. Die Auswahl kann beispielsweise abhängig von dem Thema der gewünschten Beratung erfolgen.

Vorzugsweise ist vorgesehen, dass das Serversystem das Thema der gewünschten Beratung ermittelt, und zwar anhand einer entsprechenden, in einer von dem Kundensystem an das Serversystem gestellten Beratungsanfrage oder einer Teilanfrage derselben enthaltenen Information. Die das Beratungsthema betreffende Information kann beispielsweise in einem http-Aufruf der Beratungsanfrage enthalten sein und z.B. in dem Aufruf einer bestimmten, das jeweilige Beratungsthema betreffenden und von dem Serversystem bereitgestellten Webseite bzw. Webadresse bestehen. Der Aufruf kann beispielsweise durch Auswählen eines in einer von dem Serversystem bereitgestellten allgemeinen Webseite enthaltenen Weblinks erzeugt und an das Serversystem gesendet werden. Ebenso kann die das Beratungsthema betreffende Angabe von dem Kunden in einer von dem Serversystem, insbesondere als Teil einer Webseite, bereitgestellten Eingabemaske wie z.B. einem Webformular eingegeben werden und an das Serversystem, z.B. als Teil eines http-Aufrufs, übermittelt werden.

Vorzugsweise ist in dem Serversystem eine Zuordnung abgelegt, die angibt, welche Beratersysteme eine Beratung zu einem bestimmten Thema anbieten. Diese Information kann beispielsweise mit einem Account verknüpft sein und von den Beratern während des Registrierungs- oder Anmeldeverfahrens an das Serversystem übertragen werden. Das Serversystem identifiziert dann diejenigen verfügbaren Beratersysteme, die eine Beratung zu diesem Thema anbieten, und gibt diese in der Verfügbarkeitsinformation an.

Vorzugsweise wird an dem Kundensystem in Ansprechen auf die von dem Serversystem übertragene Verfügbarkeitsinformation eine Bildschirmanzeige erzeugt, in der die in der Verfügbarkeitsinformation angegebenen Beratersysteme dargestellt sind, wobei die verfügbaren und an dem Bildschirm angezeigten Beratersysteme vorzugsweise von dem Kunden durch eine Benutzereingabe an dem Kundensystem auswählbar sind.

Das Serversystem kann dazu als Teil der Verfügbarkeitsinformation Bild- und/oder Textinformationen an das Kundensystem übermitteln, die die Darstellung einer grafischen Repräsentation der verfügbaren Beratersysteme ermöglichen. Diese Informationen können beispielsweise eine Webseite mit Daten in einem HTML oder XML-Format umfassen, wobei die Webseite zusätzliche Daten oder Dateien umfassen kann, die über die Informationen im HTML oder XML-Format in die Webseite eingebunden und mit dieser verknüpft sind. Die Webseite kann an das Kundensystem übertragen werden und dort von einem Browser des Kundensystems angezeigt werden.

Zu jedem verfügbaren Beratersystem kann die übermittelte Verfügbarkeitsinformation, insbesondere eine entsprechende Webseite, Bilddaten bzw. Bilddateien wie z.B. JPG oder BMP-Daten enthalten, die eine grafische Darstellung der verfügbaren Berater an dem Bildschirm des Kunden ermöglichen, beispielsweise als Teil einer durch einen Webbrowser erzeugten Bildschirmdarstellung der übertragenen Website. Beispielsweise können die Daten, die vorzugsweise in dem Serversystem abgelegt sind, eine fotografische Darstellung des dem jeweiligen Beratersystem zugeordneten Beraters enthalten. Es können zu einem Berater auch mehrere Bilder in dem Serversystem abgelegt oder verfügbar sein, welche den Berater beispielsweise vor verschiedenen Hintergründen zeigen, wobei das Serversystem eines dieser Bilder auswählt und als Teil der Verfügbarkeitsinformation an das Kundensystem übermittelt. Das übermittelte Bild wird dabei vorzugsweise abhängig von dem Beratungsthema passend ausgewählt. Wenn zu dem betreffenden Zeitpunkt bereits ein Ersatzhintergrund ausgewählt wurde, kann das Bild auch in Abhängigkeit von dem ausgewählten Ersatzhintergrund gewählt werden, beispielsweise derart, dass der Hintergrund in dem Bild dem ausgewählten Ersatzhintergrund entspricht oder mit diesem identisch ist. Das Bild des Beraters kann von dem Anbietersystem erzeugt werden, z.B. indem ein Foto des Beraters und ein entsprechendes Hintergrundbild zusammengefügt werden, insbesondere in Ansprechen auf die Beratungsanfrage bzw. die Auswahl des Ersatzhintergrunds.

Die Verfügbarkeitsinformation enthält vorzugsweise zu jedem verfügbaren Beratersystem einen Link oder andere geeignete Anweisung zur Erzeugung eines http-Aufrufs, der an dem Kundensystem zur Erzeugung und Aussendung einer das jeweilige Beratersystem identifizierenden Berateranfrage verwendet werden kann. Der Link ist mit den Informationen zur grafischen Darstellung der Beratersysteme vorzugsweise so verknüpft, dass die grafische Darstellung jedes Beratersystems in der an dem Kundensystem erzeugten Bildschirmanzeige die Funktion einer auswählbaren Schaltfläche aufweist, die der Kunde durch ein Eingabegerät wie z.B. eine Computermaus auswählen bzw. anklicken kann, woraufhin die Anfrage erzeugt bzw. der Link aktiviert und der http-Request gesendet wird.

Das Anbietersystem trifft in einem Auswahlschritt eine Auswahl aus mehreren Ersatzhintergründen, die zu dem Zeitpunkt der Beratungsanfrage in bzw. an dem Anbietersystem verfügbar sind. Die Auswahl des Ersatzhintergrundes erfolgt insbesondere in Ansprechen auf die Beratungsanfrage bzw. eine Teilanfrage der Beratungsanfrage, die z.B. einen wie vorstehend beschriebenen http-Request umfassen kann. Die Auswahl des Ersatzhintergrunds erfolgt dabei noch vor dem Beginn des Live-Beratervideos in dem Live-Video-Stream, so dass das Live-Beratervideo von Beginn an mit dem entsprechenden Ersatzhintergrund versehen werden kann, wodurch von vorne herein eine erwartungsgemäße und attraktive Präsentation des Beraters gegenüber dem Kunden erreicht wird.

Die Auswahl des Ersatzhintergrunds kann in Abhängigkeit von vorgegebenen Parametern erfolgen, welche vorzugsweise zumindest einen Teil des Inhalts der Beratungsanfrage umfassen, insbesondere das in der Beratungsanfrage angegebene bzw. anhand der Beratungsanfrage identifizierbare Beratungsthema, die Identität des Kundensystems und/oder die Identität des von dem Kunden ausgewählten Beraters bzw. Beratersystems. Das Beratungsthema kann ein bestimmtes Reiseziel oder eine bestimmte Warenkategorie darstellen, zu der eine Beratung gewünscht ist. Durch die Auswahl des Ersatzhintergrunds in Abhängigkeit von dem Beratungsthema wird der Hintergrund des Live-Stream-Videos der Erwartung des Kunden entsprechend angepasst.

Die Auswahl des Ersatzhintergrundes kann auch umfassen oder darin bestehen, dass ein zu einem aktuellen Zeitpunkt oder zu einem aktuellen, allgemeinen Thema passender Ersatzhintergrund ausgewählt wird. Beispielsweise kann aus mehreren, verschiedene saisonale Themen widerspiegelnden Ersatzhintergründen ein zu der aktuellen Saison passender Ersatzhintergrund ausgewählt werden. Ebenso kann der Ersatzhintergrund abhängig von einem aktuell beworbenen Angebot, beispielsweise Reise- oder Warenangebot, aus mehreren derartige Angebote wiederspiegelnden Ersatzhintergründen gewählt werden, oder der Ersatzhintergrund kann eine sonstige aktuelle Werbung aus mehreren verfügbaren Werbeangeboten darstellen. Schließlich kann es sich auch um einen wie nachstehend beschrieben von dem Berater aus der Mehrzahl der verfügbaren Ersatzhintergründe persönlich ausgewählten Ersatzhintergrund handeln. Auch in diesen Fällen kann das Aktivieren und somit letztlich das Auswählen des jeweiligen Ersatzhintergrundes erst zu demjenigen Zeitpunkt erfolgen, zu dem eine Beratungsanfrage vom Anbietersystem empfangen wird.

Die vorzugsweise in Ansprechen auf die Beratungsanfrage durchgeführte Auswahl des verwendeten Ersatzhintergrundes kann in mehreren Schritten erfolgen, wobei in jedem Schritt vorzugsweise einer oder mehrere von mehreren möglichen Ersatzhintergründen ausgewählt werden. Ein Auswahlschritt kann also auch zu einer aus mehreren Ersatzhintergründen bestehenden Teilauswahl aus einer größeren Gesamtmenge von verfügbaren Ersatzhintergründen bestehen. Beispielsweise kann die Auswahl in einem hierarchischen mehrstufigen Auswahlprozess erfolgen, während dessen die Anzahl der möglichen Ersatzhintergründe sukzessive eingeschränkt wird, um schließlich einen Ersatzhintergrund auszuwählen. Gemäß einer Ausführungsform wird zunächst eine Vorauswahl getroffen, bei der eine Teilmenge der verfügbaren Ersatzhintergründe ausgewählt wird, die einen oder mehrere Ersatzhintergründe umfasst. Anschließend kann eine Endauswahl getroffen werden, bei der einer der vorausgewählten Ersatzhintergründe ausgewählt wird, der dann verwendet wird.

Die Auswahl des Ersatzhintergrunds aus den in dem Anbietersystem verfügbaren Ersatzhintergründen kann durch das Serversystem, durch das ausgewählte Beratersystem oder in Zusammenwirken des Serversystems und des Beratersystems getroffen werden. Beispielsweise kann in dem Serversystem eine wie vorstehend beschriebene Vorauswahl getroffen werden und in dem Beratersystem ausgehend von der Vorauswahl eine wie vorstehend beschriebene Endauswahl getroffen werden. Das Serversystem kann dazu eine Angabe der vorausgewählten Ersatzhintergründe an das ausgewählte Beratersystem senden.

Die Auswahl des Ersatzhintergrunds bzw. eine wie vorstehend beschriebene Teil-, Vor- oder Endauswahl kann eine automatische Auswahl eines oder mehrerer Ersatzhintergründe umfassen und/oder eine Benutzereingabe, durch die ein oder mehrere Ersatzhintergründe ausgewählt werden. Dabei kann insbesondere eine automatische Vorauswahl getroffen werden, ausgehend von der eine Endauswahl durch eine Benutzereingabe getroffen wird. Die Benutzereingabe wird in diesem Fall bevorzugt von einem Berater getätigt.

Eine automatische Auswahl erfolgt durch ein automatisches Auswahlverfahren, welches einen oder mehrere Ersatzhintergründe in einer vordefinierten Abhängigkeit von einem oder mehreren Parametern bestimmt, wobei die Parameter insbesondere Informationen aus der Beratungsanfrage wie z.B. das Beratungsthema enthalten.

Eine durch eine Benutzereingabe durchgeführte Auswahl wird vorzugsweise durch eine an dem jeweiligen System erzeugte Abfrage einer Benutzereingabe oder Eingabeaufforderung initiiert, die vorzugsweise in Ansprechen auf die Beratungsanfrage erzeugt wird. Zum Zweck einer solchen Abfrage kann beispielsweise an dem jeweiligen System eine Bildschirmanzeige erzeugt werden, die den Benutzer - in der Regel einen Berater - zu einer entsprechenden Auswahl auffordert. Die Aufnahme der Live-Video-Informationen oder zumindest dessen Übertragung in dem Live-Video-Streams beginnen vorzugsweise erst, nachdem auf die Abfrage eine Benutzereingabe erfolgt ist, so dass sichergestellt wird, dass das Live-Beratervideo einen geeigneten Ersatzhintergrund enthält.

Die Abfrage bzw. Eingabeaufforderung kann das Erzeugen einer Bildschirmanzeige an dem Beratersystem umfassen, in dem vorzugsweise Informationen über die Beratungsanfrage wie z.B. das Beratungsthema dargestellt sind, so dass der Berater diese Informationen bei der Auswahl des Ersatzhintergrunds durch eine Benutzereingabe berücksichtigen kann.

Gemäß einer Ausführungsform wird an dem ausgewählten Beratersystem eine Bildschirmanzeige erzeugt, in der mehrere verfügbare Ersatzhintergründe dargestellt sind, die von dem Berater an dem Beratersystem durch eine Benutzereingabe auswählbar sind. Die Darstellung der Ersatzhintergründe kann beispielsweise eine grafische Wiedergabe der jeweiligen Ersatzhintergründe umfassen.

Die Information über die an dem Beratersystem auswählbaren Ersatzhintergründe kann dem Beratersystem von dem Serversystem zur Verfügung gestellt werden. Das Serversystem sendet dazu entsprechende Informationen an das Beratersystem, welche vorzugsweise auch die für eine wie vorstehend beschriebene Bildschirmanzeige notwendigen Informationen enthalten, wobei die Bildschirmanzeige an dem Beratersystem in Ansprechen auf dem Empfang dieser Informationen erzeugt wird.

Das Serversystem kann dazu als Teil der übersendeten Informationen Bild- und/oder Textinformationen an das Beratersystem übermitteln, die eine bildliche Darstellung der auswählbaren Ersatzhintergründe ermöglichen. Die Informationen können beispielsweise eine Webseite mit Daten in einem HTML oder XML-Format umfassen, wobei die Webseite zusätzliche Daten oder Dateien umfassen kann, die über die Informationen im HTML oder XML-Format in die Webseite eingebunden und mit dieser verknüpft sind, wie z.B. Bilddaten bzw. Bilddateien wie etwa JPG oder BMP-Daten. Beispielsweise kann für jeden auswählbaren Ersatzhintergrund eine Bilddatei enthalten sein, die eine bildliche Darstellung des Ersatzhintergrunds als Teil der Bildschirmanzeige ermöglicht.

Die in der an dem Beratersystem erzeugten Bildschirmanzeige enthaltenen grafischen Darstellungen der auswählbaren Ersatzhintergründe weisen vorzugsweise jeweils die Funktion einer Schaltfläche auf, so dass der Benutzer bzw. Berater einen Ersatzhintergrund durch Auswählen der jeweiligen Darstellung, beispielsweise durch Anklicken mit einer Computermaus, auswählen kann. Die dieser Funktion zugrunde liegenden Konfigurationsinformationen sind vorzugsweise in den von dem Serversystem übertragenen Informationen in Bezug auf die verfügbaren Ersatzhintergründe enthalten, beispielsweise als Teil der Webseite, welche die Darstellung der auswählbaren Ersatzhintergründe enthält. In der von dem Serversystem an das Beratersystem übertragenen Information über die auswählbaren Ersatzhintergründe sind vorzugsweise die Ersatzhintergründe angegeben, die von dem Serversystem im Rahmen einer wie vorstehend beschriebenen Vorauswahl ausgewählt wurden.

Gemäß einer Ausführungsform kann an dem Beratersystem auch eine von einer Vorauswahl des Serversystems abweichende Wahl des Ersatzhintergrunds getroffen werden, d.h. die Vorauswahl kann von dem Beratersystem überschrieben werden, und zwar automatisch oder durch eine Benutzereingabe.

Es kann auch die Möglichkeit vorgesehen werden, an dem Serversystem oder Beratersystem durch eine Benutzereingabe einzustellen, ob ein Überschreiben der durch das Serversystem durchgeführten Vorauswahl eines oder mehrerer Ersatzhintergründe zugelassen wird oder nicht. Ist ein Überschreiben nicht zugelassen worden, erfolgt vorzugsweise keine Abfrage einer Benutzereingabe, sondern es wird ein vorausgewählter Ersatzhintergrund verwendet. Andernfalls wird der Benutzer durch eine Eingabeaufforderung aufgefordert, den gewünschten Ersatzhintergrund auszuwählen, der dann verwendet wird. Der Benutzer hat vorzugsweise auch die Möglichkeit, die Eingabeaufforderung zu quittieren, woraufhin der von dem Serversystem vorausgewählte Hintergrund verwendet wird.

Auf die Auswahl des Ersatzhintergrundes folgend beginnt die eigentliche Live-Beratung zwischen dem Kundensystem und dem Beratersystem. Dabei werden an dem Beratersystem live Video-Informationen, d.h. zeitlich variable Bildinformationen, die beispielsweise aufeinander folgende Einzelbilder des Videos definieren können, aufgenommen. Hierzu kann eine Webcam oder Digitalkamera oder eine andere Kamera verwendet werden, die in der Lage ist, vorzugsweise digitale Video-Informationen aufzunehmen. Diese Kamera kann in an sich bekannter Weise, z.B. über ein USB-Kabel, mit dem Beratercomputer verbunden oder in den Beratercomputer integriert sein. Die Video-Informationen enthalten das Bild des Beraters, der während der Aufnahme live die Beratung durchführt, und den Hintergrund, vor dem sich der Berater dabei aufhält.

Der in dem aufgenommenen Videobild enthaltene Hintergrund wird live, d.h. während der laufenden Videoaufnahme und vorzugsweise zumindest annähernd in Echtzeit, durch den ausgewählten Ersatzhintergrund ersetzt. Hierbei wird vorzugsweise ein softwaretechnisches digitales Video-bearbeitungsverfahren eingesetzt. Das Verfahren kann einen Schritt umfassen, bei dem die Kontur des in dem Videobild enthaltenen Beraters bzw. der Person erfasst und die sich innerhalb der Kontur befindlichen Bildinformationen, ausgeschnitten werden. Danach werden in dem Ersatzhintergrund die Bildinformationen ausgeschnitten, die dem Negativ der erfassten Kontur entsprechen, d.h. der Kontur des in dem aufgenommenen Videobild enthaltenen Hintergrunds, und die ausgeschnittene Person und der dazu passende Ausschnitt des Ersatzhintergrunds werden miteinander vereint, so dass ein Live-Beratervideo erzeugt wird, in dem der Berater vor dem Ersatzhintergrund zu sehen ist.

Die in den ursprünglichen Live-Video-Informationen durchgeführte Konturerfassung umfasst vorzugsweise eine Bewegungserkennung, in der bewegte und unbewegte Bereiche in dem Videobild identifiziert werden, wobei Bereiche mit einer sich rasch ändernden Bildinformation als bewegte Bereiche und Bereiche mit einer sich wenig oder nur sehr langsam ändernden Bildinformation als Hintergrundbereiche interpretiert werden können. Dabei kann in geeigneter Weise auch die Information berücksichtigt bzw. verwertet werden, dass eine Kontur in der Form einer Person bzw. eines Beraters erwartet wird.

Aus dem so erzeugten Live-Beratervideo wird ein Video-Stream erzeugt, der das Live-Beratervideo enthält, d.h. dass die in dem Live-Beratervideo enthaltenen Bildinformationen einschließlich des Beraters und des Ersatzhintergrunds in dem über den Video-Stream übertragenen Videobild zu sehen sind. Der Video-Stream wird dabei live erzeugt, d.h. während der laufenden Aufnahme der ursprünglichen Live-Video-Informationen durch die Kamera des Beratersystems und des Ersetzens von dessen Hintergrund mit dem Ersatzhintergrund.

Das mit dem Live-Video-Stream übertragene Videobild kann neben dem Live-Beratervideo weitere bewegte oder nicht bewegte Bildinformationen enthalten, die mit dem Live-Video-Stream übertragen und an dem Kundensystem gemeinsam mit dem Live-Beratervideo angezeigt werden können. Auf diese Weise kann das Videobild mit zusätzlichen für die Beratung relevanten Informationen wie Videos oder Bildern, z.B. eines Reiseorts, eines Hotels oder eines Produkts oder zu der Beratung passenden textuellen Informationen oder auch Werbung angereichert werden, die dem Kunden angezeigt werden, so dass eine noch attraktivere Darstellung und Beratung erreicht wird. Das Live-Videobild und die zusätzlichen Bildinformationen können dabei in verschiedenen Segmenten des Videobilds enthalten sein. Beispielsweise kann ein rechteckiges Segment das Live-Beratervideo enthalten und ein das rechteckige Segment L-förmig umgebendes Segment kann die zusätzlichen Bildinformationen enthalten. Ebenso kann dem Live-Beratervideo ein im Inneren des Live-Beratervideos angeordnetes Logo des Anbieters bzw. Betreibers aufgeprägt werden.

An dem Beratersystem und/oder an dem Serversystem kann eine entsprechende Auswahl getroffen werden, ob und welche zusätzlichen Bildinformationen dem durch den Live-Video-Streams übertragenen Video hinzugefügt werden.

Beispielsweise können an dem Beratersystem während des laufenden Streams ein oder mehrere zusätzliche Informationselemente durch eine Benutzereingabe des Beraters ausgewählt werden, wobei auf die Auswahl eines zusätzlichen Informationselements folgend dem Informationselement entsprechende zusätzliche Informationen an das Kundensystem übermittelt werden. Vorzugsweise werden die zusätzlichen Informationen, wie vorstehend beschrieben, live in das durch den Live-Video-Stream übertragene Video eingebunden und als zusätzliche Bildinformationen des gestreamten Live-Videos übertragen.

Auf die Auswahl eines zusätzlichen Informationselements folgend wird vorzugsweise eine automatische Segmentierung des in dem Live-Video-Stream übertragenen Videobilds durchgeführt, derart, dass der Live-Video-Stream und die hinzugefügten zusätzlichen Informationen in verschiedenen Segmenten des Videobilds enthalten sind. Der das Live-Beratervideo zeigende Bildausschnitt des Stream-Videos kann dazu auf eine passende Größe gebracht, insbesondere verkleinert werden. An dem Beratersystem können auch Informationselemente abgewählt werden, woraufhin die Übertragung der entsprechenden zusätzlichen Informationen in dem Live-Stream beendet wird und eine Desegmentierung des Bildes erfolgen kann, die z.B. eine Vergrößerung des Beratervideos in dem gestreamten Video umfassen kann.

Vorzugsweise wird an dem Beratersystem während des an das Kundensystem übertragenen Live-Streams das gestreamte Live-Video angezeigt, so dass der Berater die dem Kunden dargestellten Informationen sehen kann. Bevorzugt wird an dem Beratersystem eine Bildschirmanzeige erzeugt, die zumindest zwei getrennte Bildschirmbereiche umfasst, wobei in einem Anreicherungs-Bildschirmbereich während des laufenden Live-Streams auswählbare zusätzliche Informationselemente und in einem Stream-Bildschirmbereich das an das Kundensystem durch den Live-Video-Stream übertragene Live-Video angezeigt wird. Dadurch wird es dem Berater ermöglicht, gleichzeitig sowohl das Stream-Video als auch die verfügbaren zusätzlichen Informationselemente im Blick zu behalten und somit das Live-Video bei laufender Beratung durch Auswahl geeigneter Informationselemente mit entsprechenden zusätzlichen Daten bzw. Informationen anzureichern.

Die Auswahl bzw. das Hinzufügen der zusätzlichen Informationselemente kann beispielsweise mittels eines Drag-and-Drop-Verfahrens durchgeführt werden, wobei die Informationselemente in dem Anreicherungsbereich angewählt und dann aus dem Anreicherungsbereich in den Streamingbereich mit dem Live-Stream gezogen werden, um diese für das Hinzufügen zu dem Live-Stream auszuwählen.

Die auswählbaren zusätzlichen Informationselemente können in dem Anreicherungs-Bildschirmbereich symbolisch angezeigt werden oder es kann die anzuzeigende Bildinformation selbst angezeigt werden. Gemäß einer vorteilhaften Ausführungsform sind die zusätzlichen Informationselemente als Teil einer Webseite dargestellt, beispielsweise unter Verwendung eines Webbrowsers, und können beispielsweise in die Webseite eingebundene Bilder, z.B. JPG-Bilder, Videos, Text und Ähnliches umfassen. Der Anreicherungs-Bildschirmbereich kann beispielsweise ein Browser-Fenster oder einen Ausschnitt eines Browser-Fensters enthalten. Der Anreicherungsbereich kann eine Browser-Funktionalität derart bereitstellen, dass durch eine Benutzereingabe nicht nur zusätzliche Informationselemente für die Einbindung in den Video-Stream ausgewählt werden können, z.B. über das vorstehend beschriebene Drag-and-Drop-Verfahren, sondern auch zwischen verschiedenen, zusätzliche Informationselemente enthaltenden Webseiten oder Webseitenbestandteilen in an sich bekannter Weise navigiert werden kann. Dadurch wird dem Berater der Zugang zu einer Vielzahl von zusätzlichen Informationselementen für die Hinzufügung zu dem Live-Stream ermöglicht, die der Berater in einer von einem herkömmlichen Websurfen bekannten Weise aufrufen kann. Die Webseiten werden vorzugsweise von dem Serversystem zur Verfügung gestellt.

Der Berater kann somit in der gewohnten Weise in dem AnreicherungsBereich des Bildschirms surfen und somit während der laufenden Beratung in einfacher und schneller Weise passende Informationselemente für die Beratung finden. Eine besonders einfache Realisierung der obigen Funktionalität wird erreicht, wenn die Anzeige in dem Anreicherungs-Bildschirmbereich von einem herkömmlichen Webbrowser erzeugt wird, welcher, beispielsweise durch ein Plugin, um die Möglichkeit erweitert worden ist, durch eine entsprechende Auswahl der dargestellten zusätzlichen Informationselemente das Hinzufügen der entsprechenden Informationen zu dem Live-Video-Stream zu veranlassen.

Die in dem Anbietersystem verfügbaren Ersatzhintergründe können beispielsweise ein oder mehrerer Hintergrundbilder, insbesondere digitale Bilder eines Formats wie z.B. JPG oder BMP, oder ein oder mehrere, insbesondere digitale, Hintergrundvideos umfassen, wobei die Bilder bzw. Videos vorzugsweise in dem Serversystem und/oder dem Beratersystem statisch abgespeichert sind, beispielsweise in einer Datenbank. Die verfügbaren Ersatzhintergründe können auch ein oder mehrere digitale Hintergrund-Video-Streams umfassen, d.h. Videos, deren Bilddaten während des laufenden Live-Beratungsvideos durch ein Streamingverfahren in das Live-Beratungsvideo eingebunden werden, wobei der Hintergrund-Stream von einem entfernt gelegenen Server empfangen werden kann. Bei dem Hintergrund-Stream kann es sich um einen Live-Stream handeln, so dass das Beratervideo live aus Bilddaten zusammengesetzt wird, die an dem Beratersystem aufgenommene Live-Bilddaten und an einem anderen Ort aufgenommene Live-Bilddaten umfassen, wodurch die Attraktivität der Beratung nochmals gesteigert wird. Beispielsweise kann der Berater unabhängig von seinem tatsächlichen Aufenthaltsort vor einem Live-Bild des Urlaubsorts präsentiert werden, für den sich der Kunde interessiert.

Das Live-Beratervideo kann von dem Serversystem erzeugt werden, in welchem Fall das Beratersystem die mit seiner Kamera aufgenommenen Live-Video-Informationen kontinuierlich an das Serversystem senden bzw. streamen kann, welches die Ersetzung des Hintergrunds durchführen und das Live-Beratervideo erzeugen kann. Prinzipiell kann das Live-Beratervideo aber auch von dem Beratersystem selbst erzeugt werden. Der bei dem Ersetzen des Hintergrunds verwendete Ersatzhintergrund kann in dem das Beratervideo erzeugenden Berater- bzw. Serversystem jeweils bereits vorhanden sein oder diesem von dem jeweils anderen System übermittelt werden. Das Hinzufügen von etwaigen zusätzlichen Informationen, beispielsweise im Fall der Auswahl von zusätzlichen Informationselementen durch einen Benutzer, kann ebenfalls durch das Beratersystem oder durch das Serversystem oder durch ein Zusammenwirken von beiden erfolgen. Das Beratersystem kann alle oder einen Teil der von diesem durchgeführten Video-Bearbeitungsverfahren oder Streamingverfahren unter Verwendung eines separaten Video-Moduls durchführen, welches einen von dem Hauptprozessor des Beratercomputers unabhängig arbeitenden Prozessor verwendet. Auf diese Weise kann eine hohe Videoqualität auch unter Verwendung eines Beratercomputers gewährleistet werden, der nicht für die Durchführung der obigen Schritte mit der gewünschten Qualität eingerichtet ist, so dass eine qualitativ hochwertige und somit ansprechende Beratung auch unter Verwendung eines solchen Computersystems ermöglicht wird.

Der Live-Video-Stream kann auch, insbesondere digitale, Live-Audio-Informationen umfassen, die an dem Beratersystem zusammen mit den Live-Video-Informationen aufgenommen werden, und zwar vorzugsweise unter Verwendung eines an dem Beratersystem vorgesehenen Mikrophons. Es können gängige Streaming-Verfahren verwendet werden, die die gleichzeitige Übertragung von Audio- und Videoinformationen in einem gemeinsamen Stream ermöglichen.

Zwischen dem Kundensystem und dem Beratersystem wird vorzugsweise eine einen Live-Dialog ermöglichende zweiseitige Live-Kommunikation durchgeführt. Dazu wird vorzugsweise parallel zu der Übertragung des Live-Video-Streams von dem Anbietersystem zu dem Kundensystem ein von dem Kundensystem generierter Live-Stream mit an dem Kundensystem aufgenommenen Live-Audio- und/oder Videoinformationen von dem Benutzersystem an das Beratersystem übertragen, wobei die enthaltenen Audio- und/oder Videoinformationen an dem Bildschirm bzw. einem Lautsprecher des Beratersystems ausgegeben werden können. Das Kundensystem kann dazu ebenfalls eine Kamera und/oder ein Mikrofon umfassen. Insbesondere wenn als Kundensystem wie nachfolgend beschrieben ein Fernsehsystem verwendet wird, kann der Kunde auch über ein von dem Kundensystem getrenntes Festnetz- oder Mobiltelefon Audioinformationen, vorzugsweise digitale Audiodaten, an das Beratersystem übertragen und dadurch mit dem Berater sprechen. Auch in diesem Fall werden die Audioinformationen von dem Beratersystem vorzugsweise als Teil des Live-Video-Streams an das Kundensystem übertragen, so dass ein zeitlicher Versatz zwischen dem Bild und dem Ton des Beraters an dem Kundensystem vermieden wird.

Das beschriebene Beratungsverfahren wird vorzugsweise webbasiert durchgeführt. Dabei sind die ein oder mehreren Kundensysteme und/oder die Beratersysteme bevorzugt über das Internet mit dem Serversystem verbunden. Das Serversystem stellt seine einzelnen hierin beschriebenen Funktionen jeweils vorzugsweise in Form eines Webservice oder einer Webanwendung bereit. Die hierin beschriebenen, an dem Beratersystem und/oder dem Kundensystem erzeugten Bildschirmanzeigen können dabei bevorzugt unter Verwendung von von dem Serversystem übertragenen Webinhalten bzw. Webseiten erzeugt werden. Beispielsweise kann auch der an das Kundensystem übertragene Live-Video-Stream in eine an dem Kundensystem dargestellte Webseite des Serversystems eingebunden bzw. mit dieser verknüpft sein und als Teil der Webseite z.B. in einem Browserfenster dargestellt werden. Die erfindungsgemäße Live-Beratung mit den hierein beschriebenen Funktionen lässt sich somit in eine Webseite und folglich in den allgemeinen Internetauftritt eines Anbieters integrieren, wodurch die Zugänglichkeit und Attraktivität dieses Beratungsangebots gesteigert wird. Die hierin beschriebenen Streaming-Vorgänge können unter Verwendung von bekannten digitalen Streaming-Verfahren durchgeführt werden.

Die Kundensysteme und Beratersysteme umfassen jeweils einen Kundencomputer bzw. Beratercomputer. Unter einem Computer ist in diesem Zusammenhang nicht nur ein Personal Computer, PC, zu verstehen, sondern allgemein jede geeignete, insbesondere netzwerk- bzw. internetfähige, digitale Recheneinrichtung, die mit einem Bildschirm und vorzugsweise auch mit einer Kamera verbunden ist. Der Bildschirm und/oder eine etwaige Kamera können dabei gemeinsam mit der Recheneinrichtung in einem Gerät integriert sein. Beispielsweise kann es sich dabei um ein mobiles Endgerät, wie z.B. ein Smartphone, handeln, welches z.B. über GPRS oder UMTS mit dem Internet verbunden sein kann und vorzugsweise ein integriertes Display als Bildschirm und eine integrierte Kamera aufweist. Das Verfahren kann dann unter Verwendung eines mobilen Betriebssystems wie z.B. Google Android oder Apple iOS durchgeführt werden. Es kann sich auch um eine, bevorzugt netzwerk- bzw. internetfähige, Recheneinrichtung handeln, die mit einem Fernsehbildschirm verbunden ist und den Fernsehbildschirm als Bildschirm nutzt, beispielsweise zur Bildung eines verbundenen Fernsehsystems bzw. Connected TV Systems. Die Recheneinrichtung kann dabei mit dem Fernsehbildschirm in einem Fernsehgerät integriert oder z.B. nach Art einer Set-Top-Box extern an dieses angeschlossen sein. Dabei können eine Kamera und/oder ein Mikrophon in das Fernsehgerät integriert sein. Die Kamera kann auch extern an das Fernsehgerät angeschlossen sein, beispielsweise über ein HDMI-Kabel, und weist in diesem Fall vorzugsweise ein integriertes Mikrophon auf.

Die Beratersysteme und/oder Kundensysteme können Webbrowser verwenden, um die entsprechenden Inhalte darzustellen und/oder ihre hierin beschriebenen Funktionen bereitzustellen. Es können dabei ein oder mehrere Plugins verwendet werden, die die Webbrowser der Beratersysteme und/oder Kundensysteme um die zusätzlichen für die Durchführung des hierin beschriebenen Verfahrens erforderlichen Funktionen erweitern. Die für das Verfahren maßgeblichen Funktionen können bei Verwendung eines Smartphones als Kunden- bzw. Beratersystem auch jeweils ganz oder teilweise durch eine Smartphone-Applikation bzw. Smartphone-App bereitgestellt werden, die auf dem Smartphone installiert ist und ein Smartphone-Betriebssystem wie z.B. Google Android oder Apple iOS nutzt. Bei Verwendung eines Fernsehgeräts, insbesondere eines Connected TV Systems, können die Funktionen auch ganz oder teilweise durch eine Connected TV Applikation bzw. Connected TV App bereitgestellt werden.

Die vorliegende Erfindung betrifft ferner ein System zur Live-Video-Beratung wenigstens eines Kunden. Das System umfasst:
- wenigstens ein Kundensystem,
- ein Netzwerk und
- ein Anbietersystem, das mit dem Kundensystem über das Netzwerk verbunden ist.

Das Anbietersystem umfasst ein Serversystem und mehrere mit dem Serversystem verbundene Beratersysteme, die jeweils einen Beratercomputer und eine an den Beratercomputer angeschlossene Kamera umfassen. Das Beratungssystem ist zur Durchführung der folgenden Schritte eingerichtet:
- Empfangen einer von dem Kundensystem über das Netzwerk gesendeten Beratungsanfrage durch das Serversystem,
- Auswählen eines von mehreren Ersatzhintergründen, die in dem Anbietersystem verfügbar sind, durch das Anbietersystem, insbesondere in Ansprechen auf die Beratungsanfrage,
- Auswählen eines Beratungssystems,
- Aufnehmen von Live-Video-Informationen mit der Kamera des ausgewählten Beratersystems und Ersetzen des in den aufgenommenen Live-Video-Informationen enthaltenen Hintergrunds durch den ausgewählten Ersatzhintergrund zur Bildung eines Live-Beratervideos, und
- Übertragen des Live-Beratervideos als Teil eines Live-Video-Streams an das Kundensystem über das Netzwerk.

Das erfindungsgemäße Beratungssystem ist vorzugsweise zur Durchführung eines wie hierin beschriebenen erfindungsgemäßen Verfahrens eingerichtet. Die hierin in Bezug auf das erfindungsgemäße Verfahren bzw. auf die Funktionalitäten der einzelnen Komponenten des Beratungssystem beschriebenen vorteilhaften Ausführungsformen und Vorteile stellen somit, soweit anwendbar, auch entsprechende vorteilhafte Ausführungsformen bzw. Vorteile des erfindungsgemäßen Systems bzw. der entsprechenden Komponenten des Systems dar.

Gemäß einer Ausführungsform umfasst zumindest ein Beratersystem ein mit dem Beratercomputer des Beratersystems verbundenes Video-Modul, welches dazu eingerichtet ist, den in dem aufgenommenen Live-Video enthaltenen Hintergrund durch den ausgewählten Ersatzhintergrund zu ersetzen und/oder um den Live-Video-Stream zu erzeugen und/oder zu übertragen.

Nachfolgend wird die vorliegende Erfindung rein beispielhaft unter Bezugnahme auf die beigefügten Figuren beschrieben. Es zeigen:
- Fig. 1: ein Beratungssystem zur Verwendung in einem Verfahren gemäß einer Ausführungsform der Erfindung,
- Fig. 2: ein Beratungssystem und eine schematische Darstellung eines Verfahrens gemäß einer Ausführungsform der Erfindung,
- Fig. 3: eine beispielhafte Bildschirmanzeige an einem Kundensystem,
- Fig. 4: eine beispielhafte Bildschirmanzeige an einem Beratersystem, und
- Fig. 5: ein beispielhaftes Videobild eines Live-Video-Streams.

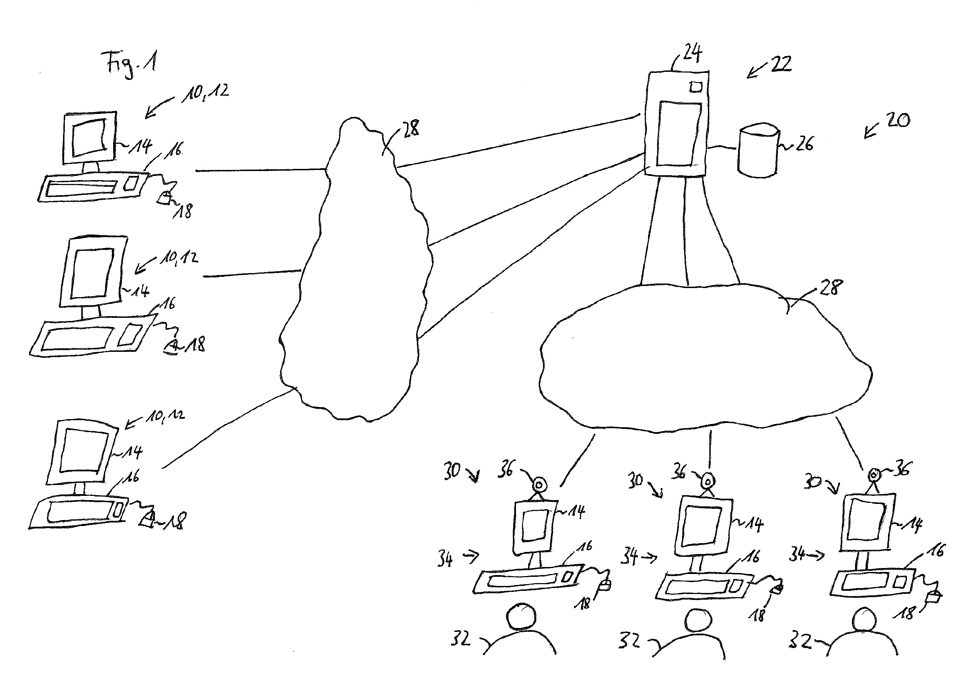

Fig. 1 zeigt ein Beratungssystem zur Verwendung in einem Verfahren gemäß einer Ausführungsform der Erfindung. Das Beratungssystem umfasst mehrere Kundensysteme 10 mit jeweils einem Kundencomputer 12, welcher einen Bildschirm 14 und als Eingabegeräte eine Tastatur 16 und eine Maus 18 aufweist. Das Beratungssystem umfasst ferner ein Anbietersystem 20 mit einem Serversystem 22, welches einen Servercomputer 24 mit einer Datenbank 26 umfasst und welches über das Internet 28 mit den Kundensystemen 10 verbunden ist. Das Anbietersystem 20 umfasst mehrere über das Internet 28 mit dem Serversystem 22 verbundene Beratersysteme 30, die jeweils mit einem Berater 32 besetzt sind. Jedes Beratersystem 30 umfasst einen Beratercomputer 34 mit einem Bildschirm 14 und einer Tastatur 16 und einer Maus 18 als Eingabegeräte sowie einer mit dem Beratercomputer 34 verbundenen Kamera 36, die vorliegend als Webkamera ausgebildet und dazu eingerichtet ist, digitale Live-Video-Informationen aufzunehmen und kontinuierlich an den Beratercomputer 34 auszugeben.

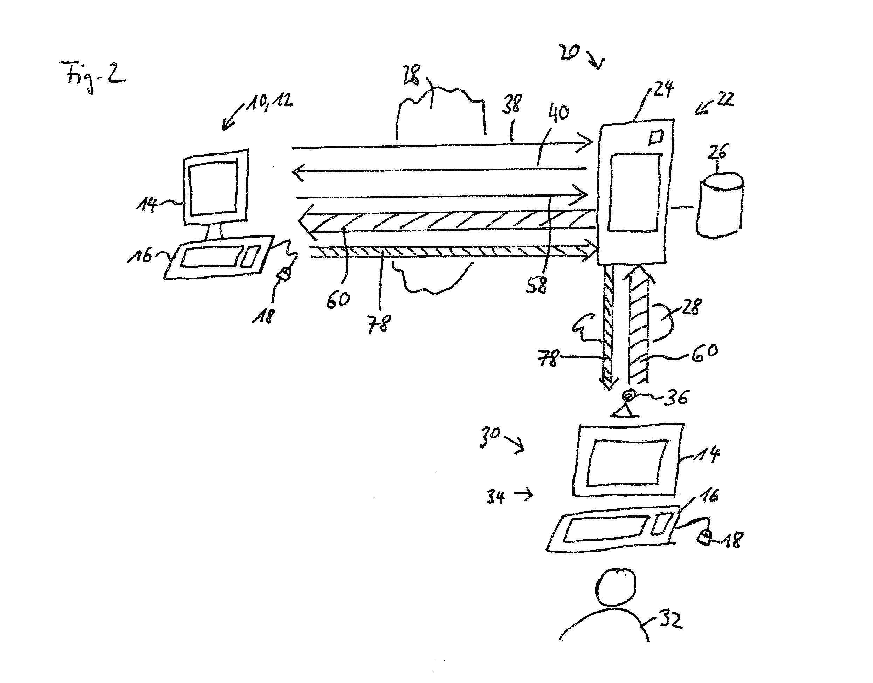

Fig. 2 bis 5 veranschaulichen den Ablauf eines Verfahrens zur Live-Beratung gemäß einer Ausführungsform der Erfindung. Fig. 2 zeigt ein Beratungssystem, welches im Wesentlichen dem in Fig. 1 gezeigten Beratungssystem entspricht, wobei der Übersichtlichkeit halber nur ein Kundensystem 10 und ein Beratersystem 30 gezeigt sind.

Wie in Fig. 2 durch einen entsprechenden Pfeil dargestellt, wird von dem Kundensystem 10 über das Internet 28 eine allgemeine Beratungsanfrage 38 an das Serversystem 22 gesendet. Die allgemeine Beratungsanfrage 38 kann beispielsweise in einem über einen Webbrowser des Kundensystems 10 getätigten Aufruf einer für die Live-Beratung vorgesehenen Webadresse bzw. Webseite des Anbieters bestehen, die in dem Serversystem 22 verfügbar bzw. abrufbar ist. Der Aufruf kann beispielsweise über einen Hyperlink oder eine Eingabe in einem Webformular getätigt werden, der bzw. das in einer in dem Browser des Kundensystems 10 geöffneten allgemeinen Webseite des Serversystems 22 enthalten ist, die zuvor von dem Kundensystem 10 abgerufen worden ist.

Die allgemeine Beratungsanfrage 38 umfasst eine Angabe des gewünschten Themas der Beratung, z.B. in der Form, dass von dem Kundensystem 10 durch die allgemeine Beratungsanfrage 38 eine Webseite aufgerufen wird, die für ein bestimmtes Thema wie z.B. ein bestimmtes Reiseziel spezifisch ist.

Das Serversystem 22 empfängt die allgemeine Beratungsanfrage 38 und ermittelt anhand des Beratungsthemas die Beratersysteme 30, die für eine Live-Beratung zu diesem Thema aktuell zur Verfügung stehen. Das Serversystem 22 sendet in Ansprechen darauf eine Verfügbarkeitsinformation 40 an das Kundensystem 10, welche im vorliegenden Ausführungsbeispiel eine der allgemeinen Beratungsanfrage 38 entsprechende Webseite umfasst, welche Daten im HTML oder XML-Format und damit verknüpfte Bilddaten umfasst. Diese Webseite wird von dem Kundensystem 10 empfangen und der Webbrowser des Kundensystems 10 erzeugt eine Bildschirmanzeige mit der Webseite auf dem Bildschirm 14 des Kundensystems 10.

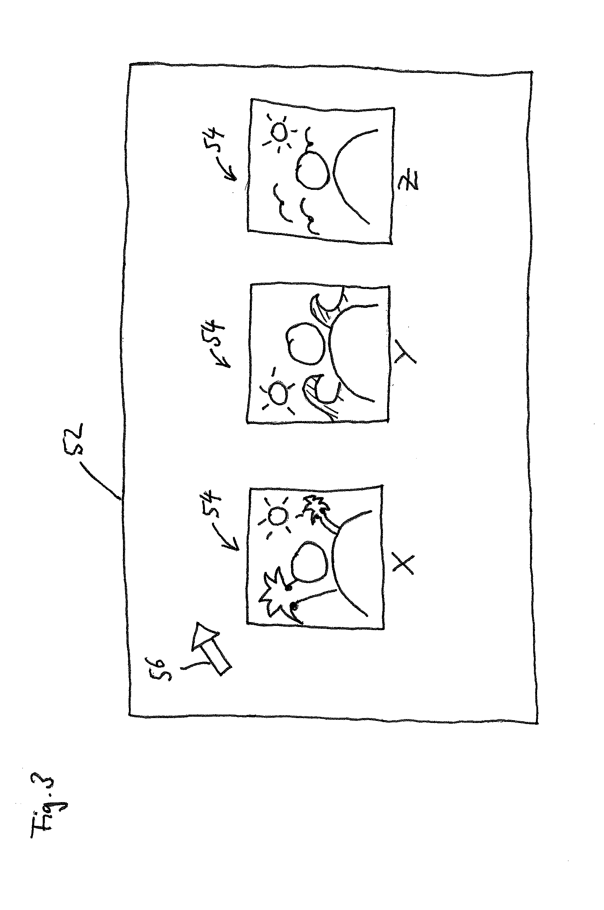

Fig. 3 zeigt eine beispielhafte Bildschirmanzeige 52 mit einer Darstellung der Webseite, die durch den Browser des Kundensystems 10 erzeugt wird. Die Webseite umfasst Daten, welche die verfügbaren Beratersysteme 30 repräsentieren und eine grafische Darstellung derselben in der Bildschirmanzeige 52 ermöglichen. Die Webseite enthält dabei zu jedem verfügbaren Beratersystem 30 eine Bilddatei, die abhängig von dem Thema ausgewählt wurde und den entsprechenden Berater 32 vor einem dem Thema entsprechenden Hintergrund zeigt. Die Bildschirmanzeige 52 zeigt die entsprechenden Bilder 54 für die einzelnen verfügbaren Beratersysteme (30) und eine Darstellung eines Textes zu jedem Beratersystem (30), welcher ebenfalls in der Webseite enthalten ist. Gezeigt ist außerdem der

Mauszeiger 56. Der Kunde kann mit der Maus 18 eines der Bilder 54 ansteuern und anklicken, um einen der angezeigten Berater 32 auszuwählen.

Die Informationen für die Darstellung der verfügbaren Beratersysteme 30, d.h. insbesondere die Bilder 54, sind in der übertragenen Webseite mit entsprechenden Schaltflächeninformationen verknüpft, derart dass das Auswählen bzw. Anklicken eines Bildes 54 zu dem Erzeugen einer das jeweilige Beratersystem 30 identifizierenden Berateranfrage 58 (Fig. 2) führt, welche an das Serversystem 22 gesendet wird und beispielsweise einen http-Aufruf umfasst.

In Ansprechen auf die allgemeine Beratungsanfrage 38 oder die Berateranfrage 58 wird durch das Anbietersystem 20 einer von mehreren in dem Anbietersystem 20 verfügbaren Ersatzhintergründen ausgewählt, wobei die Information über die verfügbaren Ersatzhintergründe beispielsweise in der Datenbank 26 abgelegt sein kann. Diese Auswahl kann eine automatische Auswahl, insbesondere durch das Serversystem 22, oder eine Auswahl aufgrund einer Benutzereingabe, insbesondere einer Benutzereingabe an dem durch die Berateranfrage 58 identifizierten Beratersystem 30, umfassen oder eine Kombination aus beidem.

An dem durch die Berateranfrage 58 identifizierten Beratersystem 30 beginnt daraufhin die Beratung, wobei mit der dortigen Kamera 36 digitale Live-Video-Informationen des Beraters 32 aufgenommen werden. Der in den aufgenommenen Live-Video-Informationen enthaltene Hintergrund wird unter Verwendung eines digitalen Videobearbeitungsverfahrens durch den ausgewählten Ersatzhintergrund ersetzt und das auf diese Weise erhaltene Live-Beratervideo, welches den Berater 32 vor dem Ersatzhintergrund zeigt, wird von dem Anbietersystem 20 über einen Live-Video-Stream 60 an das Kundensystem 10 übertragen, wo das Live-Beratervideo z.B. in einem Browserfensters des Webbrowsers angezeigt wird. Das Live-Beratervideo enthält neben den bewegten Live-Bildinformationen auch Live-Audio-Informationen, die von einem Mikrofon an dem Beratersystem 30 aufgenommen werden.

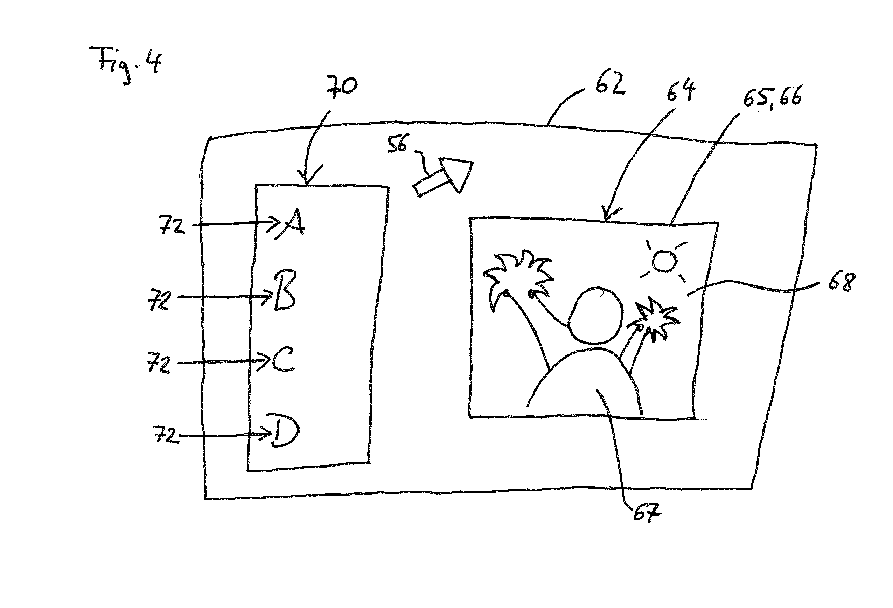

Fig. 4 zeigt eine Bildschirmanzeige 62, die an dem Beratersystem 30 während der Beratung erzeugt wird. Die Bildschirmanzeige 62 umfasst zwei getrennte Bereiche. Zum einen ist ein Streaming-Bereich 64 vorgesehen, in dem das über den Live-Video-Stream 60 übertragene Live-Video 65 gezeigt wird, welches vorliegend durch das Live-Beratervideo 66 mit dem Bild 67 des Beraters 32 und dem ausgewählten Ersatzhintergrund 68 gebildet ist. Zum anderen ist ein Anreicherungsbereich 70 vorgesehen, in dem zusätzliche Informationselemente 72 dargestellt sind.

Der Berater 32 kann über die Maus 18 eines der Informationselemente 72 anwählen und über Drag-and-Drop in den Streamingbereich 64 ziehen, um diese für eine Hinzufügung zu dem Live-Video-Stream 60 auszuwählen. In Ansprechen auf die Auswahl eines Informationselements 72 wird eine Segmentierung des Videobildes des Live-Streams 60 durchgeführt.

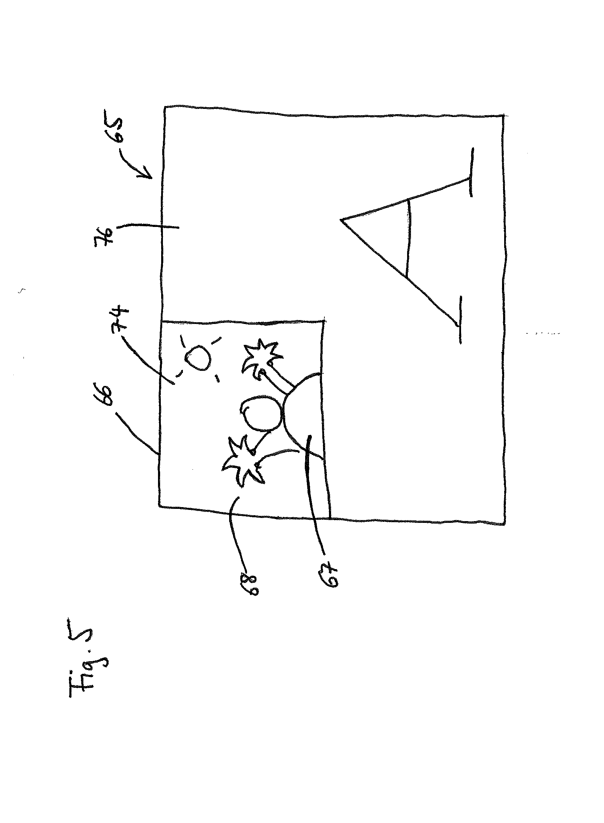

Fig. 5 zeigt ein beispielhaftes, mit dem Live-Stream 60 übertragenes Live-Stream-Video 65 nach der Segmentierung. Das Videobild des Live-Stream-Videos 65 enthält das Live-Beratervideo 66 in einem rechteckigen Teilsegments 74. Diese ist von einem L-förmigen Segment 76 umgeben, in dem eine dem ausgewählten Informationselement 72 entsprechende Bildinformation gezeigt wird.

Wie in Fig. 2 gezeigt, wird gleichzeitig zu dem Live-Video-Stream 60 des Anbietersystems 20 ein Live-Video- und/oder Audiostream 78 an dem Kundensystem 10 erzeugt und über das Serversystem 22 an das Beratersystem 30 übertragen, wobei die enthaltenen Bild- und/oder Toninformationen dort ausgegeben werden können, so dass ein Dialog zwischen dem Kunden und dem Berater 32 ermöglicht wird. Bevorzugt wird vom Kundensystem 10 nur ein reiner Audiostream 78 an das Beratersystem 30 übertragen, um so bei der Bildschirmanzeige 62 des Beratersystems 30 maximal viel Platz für die Anzeige von Informationselementen 72 zur Verfügung zu haben.

### Bezugszeichenliste

- 10: Kundensystem
- 12: Kundencomputer
- 14: Bildschirm
- 16: Tastatur
- 18: Maus
- 20: Anbietersystem
- 22: Serversystem
- 24: Servercomputer
- 26: Datenbank
- 28: Internet
- 30: Beratersystem
- 32: Berater
- 34: Beratercomputer
- 36: Kamera
- 38: allgemeine Beratungsanfrage
- 40: Verfügbarkeitsinformation
- 52: Bildschirmanzeige
- 54: Bild
- 56: Mauszeiger
- 58: Berateranfrage
- 60: Live-Video-Stream
- 62: Bildschirmanzeige
- 64: Streamingbereich
- 65: Live-Stream-Video
- 66: Live-Beratervideo
- 67: Bild des Beraters
- 68: Ersatzhintergrund
- 70: Anreicherungsbereich
- 72: Informationselement
- 74, 76: Segment
- 78: Video/Audio-Stream des Kunden

## Patentansprüche

1. Verfahren zur Live-Video-Beratung wenigstens eines Kunden unter Verwendung eines Beratungssystems, welches wenigstens ein Kundensystem (10) mit einem Kundencomputer (12), ein Netzwerk (28) sowie ein über das Netzwerk (28) mit dem Kundensystem (10) verbundenes Anbietersystem (20) umfasst, wobei das Anbietersystem (20) ein Serversystem (22) und mehrere mit dem Serversystem (22) verbundene Beratersysteme (30) mit jeweils einem Beratercomputer (34) und jeweils einer Kamera (36) umfasst,
wobei das Verfahren die Schritte umfasst:
- Empfangen einer von dem Kundensystem (10) über das Netzwerk (28) gesendeten Beratungsanfrage (38, 58) durch das Serversystem (22),
- Auswählen eines von mehreren Ersatzhintergründen (68), die in dem Anbietersystem (20) verfügbar sind, durch das Anbietersystem (20), insbesondere in Ansprechen auf die Beratungsanfrage (38, 58),
- Auswählen eines Beratungssystems (30) für die Live-Beratung,
- Aufnehmen von Live-Video-Informationen mit der Kamera (36) des ausgewählten Beratersystems (30) und Ersetzen des in den aufgenommenen Live-Video-Informationen enthaltenen Hintergrunds durch den ausgewählten Ersatzhintergrund (68) zur Bildung eines Live-Beratervideos (66), und
- Übertragen des Live-Beratervideos (66) als Teil eines Live-Video-Streams (60) an das Kundensystem (10) über das Netzwerk (28).

2. Verfahren nach Anspruch 1,
**dadurch gekennzeichnet, dass** ein Beratungssystem verwendet wird, das mehrere Kundensysteme (10) mit jeweils einem Kundencomputer (12) umfasst, die mit dem Anbietersystem (20) über das Netzwerk (28) verbunden sind, wobei von dem Anbietersystem (20) gleichzeitig mehrere verschiedene Live-Video-Streams (60) an verschiedene Kundensysteme (10) übertragen werden, wobei unterschiedliche Live-Video-Streams (60) von unterschiedlichen Beratersystemen (30) aufgenommene Live-Video-Informationen und verschiedene Ersatzhintergründe (68) enthalten.

3. Verfahren nach zumindest einem der vorstehenden Ansprüche,
**dadurch gekennzeichnet, dass** das Beratersystem (30) für die Live-Beratung durch das Kundensystem (10) ausgewählt wird und das Kundensystem (10) eine Berateranfrage (58) an das Anbietersystem (20) überträgt, anhand der das ausgewählte Beratersystem (30) identifizierbar ist.

4. Verfahren nach zumindest einem der vorstehenden Ansprüche,
**dadurch gekennzeichnet, dass** das Serversystem (22) auf die Beratungsanfrage (38, 58) eine Verfügbarkeitsinformation (40) an das Kundensystem (10) sendet, die eine Angabe der zur Verfügung stehenden Beratersysteme (30) enthält.

5. Verfahren nach Anspruch 4,
**dadurch gekennzeichnet, dass** an dem Kundensystem (10) eine Bildschirmanzeige (52) erzeugt wird, in der die verfügbaren Beratersysteme (30) dargestellt sind, wobei die verfügbaren Beratersysteme (30) von dem Kunden durch eine Benutzereingabe auswählbar sind.

6. Verfahren nach zumindest einem der vorstehenden Ansprüche,
**dadurch gekennzeichnet, dass** die Beratungsanfrage (38, 58) eine Angabe des Themas der gewünschten Beratung enthält, wobei der Ersatzhintergrund (68) vorzugsweise in Abhängigkeit von dem angegebenen Thema ausgewählt wird.

7. Verfahren nach zumindest einem der vorstehenden Ansprüche,
**dadurch gekennzeichnet, dass** zunächst eine Vorauswahl getroffen wird, bei der eine Teilmenge der verfügbaren Ersatzhintergründe (68) ausgewählt wird, und anschließend eine Endauswahl getroffen wird, bei der einer der vorausgewählten Ersatzhintergründe (68) ausgewählt wird.

8. Verfahren nach zumindest einem der vorstehenden Ansprüche,
**dadurch gekennzeichnet, dass** die Auswahl des Ersatzhintergrunds (68) eine automatische Auswahl eines oder mehrerer Ersatzhintergründe (68) und/oder eine Benutzereingabe umfasst, durch die ein oder mehrere Ersatzhintergründe (68) ausgewählt werden.

9. Verfahren nach Anspruch 8,
**dadurch gekennzeichnet, dass** an dem Beratersystem (30) eine Bildschirmanzeige erzeugt wird, in der mehrere verfügbare Ersatzhintergründe (68) dargestellt sind, die von dem Berater (32) durch eine Benutzereingabe auswählbar sind.

10. Verfahren nach zumindest einem der vorstehenden Ansprüche,
**dadurch gekennzeichnet, dass** an dem Beratersystem (30) ein oder mehrere zusätzliche Informationselemente (72) durch eine Benutzereingabe ausgewählt werden, wobei auf die Auswahl eines zusätzlichen Informationselements (72) folgend dem Informationselement (72) entsprechende zusätzliche Informationen an das Kundensystem (10) übermittelt werden.

11. Verfahren nach Anspruch 10,
**dadurch gekennzeichnet, dass** die zusätzlichen Informationen in das durch den Live-Video-Stream (60) übertragene Live-Stream-Video (65) eingebunden werden.

12. Verfahren nach Anspruch 10 oder 11,
**dadurch gekennzeichnet, dass** das durch den Live-Video-Stream (60) übertragene Live-Stream-Video (65) in voneinander getrennte Bildsegmente (74, 76) aufgeteilt wird, wobei
ein Segment (74) das Live-Beratervideo (66) enthält und ein anderes Segment (76) die zusätzlichen Informationen enthält.

13. Verfahren nach zumindest einem der vorstehenden Ansprüche,
**dadurch gekennzeichnet, dass** an dem Beratersystem (30) eine Bildschirmanzeige (62) erzeugt wird, die zumindest zwei getrennte Bildschirmbereiche (62, 70) umfasst, wobei in einem Anreicherungs-Bildschirmbereich (70) auswählbare zusätzlichen Informationselemente (72) und in einem Streaming-Bildschirmbereich (64) das an das Kundensystem (10) durch den Live-Video-Stream (60) übertragene Live-Stream-Video (65) angezeigt werden.

14. Verfahren nach zumindest einem der vorstehenden Ansprüche,
**dadurch gekennzeichnet, dass** die verfügbaren Ersatzhintergründe (68) ein oder mehrere Hintergrundbilder, ein oder mehrere Hintergrundvideos und/oder ein oder mehrere Hintergrund-Live-Streams umfassen.

15. System zur Live-Video-Beratung wenigstens eines Kunden, umfassend
- wenigstens ein Kundensystem (10),
- ein Netzwerk (28),
- ein Anbietersystem (20), das mit dem Kundensystem (10) über das Netzwerk (28) verbunden ist,
- wobei das Anbietersystem (20) ein Serversystem (22) und mehrere mit dem Serversystem (22) verbundene Beratersysteme (30) umfasst, die jeweils einen Beratercomputer (34) und eine an den Beratercomputer (34) angeschlossene Kamera (36) umfassen,
wobei das Beratungssystem zur Durchführung der folgenden Schritte eingerichtet ist:
- Empfangen einer von dem Kundensystem (10) über das Netzwerk (28) gesendeten Beratungsanfrage (38, 58) durch das Serversystem (22),
- Auswählen eines von mehreren Ersatzhintergründen (68), die in dem Anbietersystem (20) verfügbar sind, durch das Anbietersystem (20), insbesondere in Ansprechen auf die Beratungsanfrage (38, 58),
- Auswählen eines Beratungssystems (30),
- Aufnehmen von Live-Video-Informationen mit der Kamera (36) des ausgewählten Beratersystems (30) und Ersetzen des in den aufgenommenen Live-Video-Informationen enthaltenen Hintergrunds durch den ausgewählten Ersatzhintergrund (68) zur Bildung eines Live-Beratervideos (66), und
- Übertragen des Live-Beratervideos (66) als Teil eines Live-Video-Streams (60) an das Kundensystem (10) über das Netzwerk (28).

16. System nach Anspruch 15,
**dadurch gekennzeichnet, dass** ein Beratersystem (30) ein mit dem Beratercomputer (34) verbundenes Video-Modul umfasst, welches dazu eingerichtet ist, den in dem aufgenommenen Live-Video enthaltenen Hintergrund durch den ausgewählten Ersatzhintergrund (68) zu ersetzen und/oder um den Live-Video-Stream (60) zu erzeugen und/oder zu übertragen.
